Europäisches Patentamt

European Patent Office

Office européen des brevets

(11) Numéro de publication: **0 317 390**
**A1**

# DEMANDE DE BREVET EUROPEEN

(21) Numéro de dépôt: **88402804.4**

(22) Date de dépôt: **08.11.88**

(51) Int. Cl.⁴: **B 62 D 5/04**

(30) Priorité: **10.11.87 FR 8715528**

(43) Date de publication de la demande:
**24.05.89 Bulletin 89/21**

(84) Etats contractants désignés: **DE ES GB IT**

(71) Demandeur: **REGIE NATIONALE DES USINES RENAULT**
**Boîte postale 103 8-10 avenue Emile Zola**
**F-92109 Boulogne-Billancourt (FR)**

(72) Inventeur: **Sauvageot, Jean-Claude**
**40, Rue des Lilas**
**F-92500 Rueil Malmaison (FR)**

**Desrus, Dany**
**8, Rue Henri Savignac**
**F-92190 Meudon (FR)**

(74) Mandataire: **Ernst-Schonberg, Michel et al**
**R.N.U.R. S. 0804 B.P. 103 8 & 10, avenue Emile-Zola**
**F-92109 Boulogne Billancourt (FR)**

(54) Mécanisme de direction à démultiplication variable asservi à la vitesse du véhicule.

(57) Mécanisme de direction à démultiplication variable asservi à la vitesse du véhicule du type comportant un moteur électrique d'entraînement d'un organe de règlage du rapport de démultiplication et dont l'alimentation est asservie à la vitesse du véhicule, caractérisé par le fait que la colonne de direction comporte de manière en soi connue un arbre d'entrée (1) et de sortie (2) auxquels sont rigidement reliés des pignons d'entrée (4) et de sortie (5) en prise avec des satellites (6, 8 - 7, 9) d'un porte satellites (10) qui se prolonge axialement par un moyeu (11) disposé concentriquement à l'un des arbres (1, 2) sur lequel est monté un organe d'entraînement (12) et de règlage du rapport de démultiplication actionné par le moteur électrique (13) à vitesse variable.

EP 0 317 390 A1

## Description

### MECANISME DE DIRECTION A DEMULTIPLICATION VARIABLE ASSERVI A LA VITESSE DU VEHICULE.

L'invention concerne un mécanisme de direction à démultiplication variable dans lequel la transmission du mouvement de rotation du volant aux bielles de commande des pivots des roues est modifiée par la vitesse de déplacement du véhicule et dans lequel la rotation du volant se traduit par un faible déplacement des bielles de commande aux vitesses élevées et par un déplacement accru desdites bielles lorsque la vitesse du véhicule est faible.

On connaît par la publication DE-A 2 507 252 un tel mécanisme dans lequel un moteur électrique est alimenté à partir d'un comparateur amplificateur des signaux vitesse et de déplacement et entraîne une vis d'actionnement d'un organe de règlage du rapport de démultiplication.

A cet effet l'organe de règlage est constitué par un chariot monté à déplacement linéaire sous l'action de la vis d'actionnement le long d'un bras articulé porteur des bielles de commande des pivots de roues dans le but de réaliser une commande directe des pivots de roues aux faibles vitesses du véhicule et une commande démultipliée aux vitesses plus élevées sous l'effet d'une modification contrôlée de la cinématique du mécanisme.

La publication FR-A 2 488 360 décrit un mécanisme de direction dans lequel un moteur couple fournit à un arbre de direction, par l'intermédiaire d'un engrenage à pignon planétaire et satellites, un effort d'assistance additionnel à l'effort de commande communiqué au volant sans possibilité de modification du rapport de démultiplication du mécanisme.

Le problème posé par cet état de la technique réside dans le fait qu'un rapport souhaité de démultiplication du mécanisme de direction est difficile à obtenir avec une précision suffisante lorsque les organes de règlage du mécanisme possèdent des déplacements linéaires ou oscillants destinés à modifier la cinématique du mécanisme.

A partir de l'état de la technique précité l'invention propose une solution au problème énoncé et concerne plus particulièrement un mécanisme caractérisé en ce que la colonne de direction comporte de manière en soi connue un arbre d'entrée et de sortie auxquels sont rigidement reliés des pignons d'entrée et de sortie en prise avec des satellites d'un porte satellites qui se prolonge axialement par un moyeu disposé concentriquement à l'un des arbres sur lequel est monté un organe d'entraînement et de règlage du rapport de démultiplication actionné par un moteur électrique à vitesse variable.

Selon le mode de réalisation préférentiel de l'invention le servomoteur électrique est alimenté par le signal de sortie délivré par un comparateur de signaux en réponse aux signaux d'entrée fournis par un capteur de la vitesse du véhicule et par des capteurs de la position angulaire des arbres d'entrée et de sortie disposés dans le boitier du mécanisme.

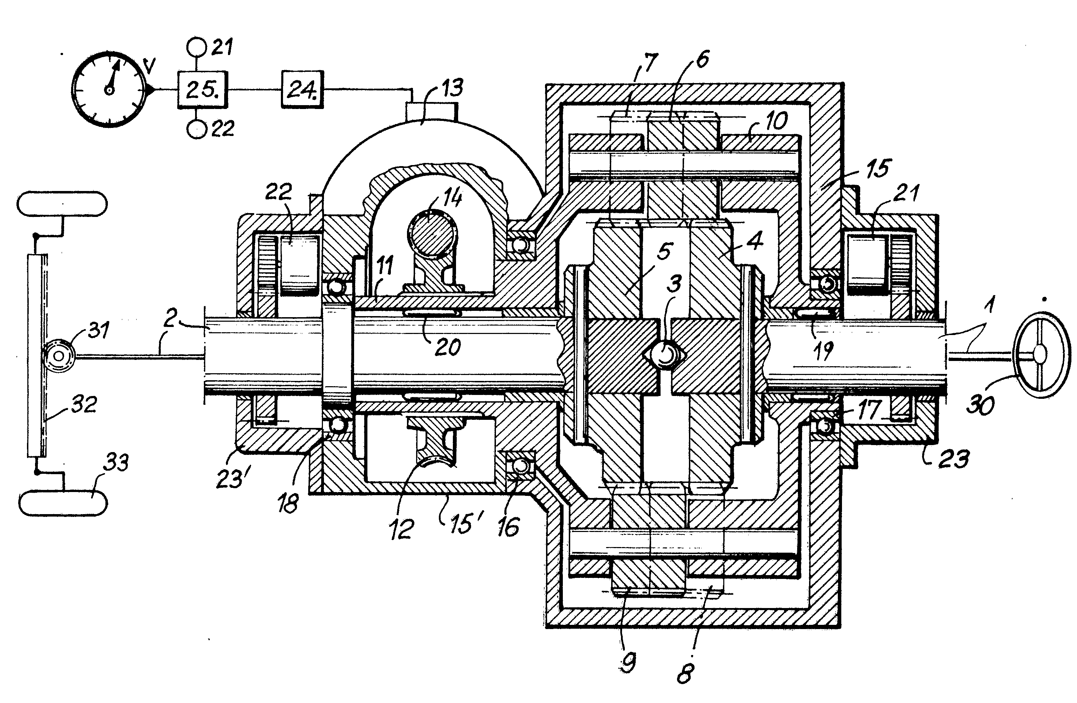

D'autres caractéristiques et particularités de l'invention ressortiront de la description qui suit, d'un exemple de réalisation de celle-ci faite en référence au dessin annexé dans lequel la figure est une vue en coupe longitudinale du mécanisme sur laquelle ont été représentés schématiquement les organes du mécanisme de direction et le servomoteur d'asservissement.

Selon la figure la colonne de direction est constituée par deux tronçons matérialisés par un arbre d'entrée 1 et un arbre de sortie 2. L'arbre d'entrée 1 est actionné par le volant de direction 30 tandis que l'arbre de sortie 2 porte le pignon 31 de commande de la crémaillère 32 d'actionnement des pivots de fusées des roues directrices 33 du véhicule. Une bille 3 intercalée entre les arbres 1, 2 assure leur alignement.

Sur les arbres 1, 2 sont rigidement montés des pignons d'entrée 4 et de sortie 5. Les pignons 4 et 5 sont respectivement en prise avec deux jeux de satellites 6, 8 et 7, 9 montés à rotation sur des axes portés par un porte satellites 10, les satellites 6, 8 du premier jeu étant respectivement en prise avec les satellites 7, 9 du deuxième jeu.

Le porte-satellites se prolonge axialement par un moyeu 11 disposé concentriquement autour de l'arbre 2 sur lequel est montée une roue dentée d'entraînement 12 recevant le couple d'un servomoteur électrique à vitesse variable 13 par l'intermédiaire d'une vis sans fin 14 qui règle le rapport de démultiplication.

L'ensemble du mécanisme constitué par les pignons 4, 5 et par le porte-satellites 10 est monté dans un carter 15 fractionné. Des paliers 16, 17, 18 autorisant la rotation du porte-satellites 10 et celui de l'arbre 2 dans le carter 15.

Par ailleurs, les arbres 1, 2 possèdent des portées de roulement d'aiguilles 19, 20 qui favorisent la rotation desdits arbres dans le porte-satellites et dans le moyeu 11.

Des capteurs 21, 22 de la position angulaire des arbres 1, 2 sont respectivement montés dans des couvercles 23, 23' accolés au carter 15 et à la fraction 15' de celui-ci qui contient la roue dentée 12 et la vis de commande 14. Par ailleurs, un capteur V de la vitesse du véhicule délivre des signaux conjointement avec les capteurs 21, 22.

- Lorsque le véhicule est à l'arrêt (vitesse véhicule nulle) la manoeuvre du volant 30 est transmise par le pignon 4 aux satellites 6, 8. Un étage de puissance 24 est actionné par les signaux des capteurs 21, 22 et délivre une tension de commande au servomoteur 13. Le porte-satellites 10 tourne dans le sens nécessaire à l'amplification du déplacement angulaire de l'arbre 2. Le couple d'actionnement de l'arbre 1 est transmis à l'arbre 2 par la voie du pignon 4, des différents satellites et du pignon 5.

Dans ces conditions le mécanisme agit à la manière d'un multiplicateur de vitesse et permet d'obtenir une modification rapide de l'angle d'orientation des roues 33 du véhicule.

- Lorsque le véhicule est en mouvement, l'étage de puissance 24 est alimenté par les signaux des capteurs 21, 22 et par un signal vitesse susceptible de varier. La tension du servomoteur 13 varie en conséquence et le porte-satellites 10 tourne dans le sens nécessaire à une réduction du rapport d'amplification des déplacements angulaires de l'arbre 2.

Dans ces conditions le mécanisme agit à la manière d'un réducteur de vitesse progressif et permet de réduire la vitesse de variation de l'angle d'orientation des roues lors de la manoeuvre du volant.

A partir d'une certaine vitesse du véhicule (par exemple 60 km/h) le servomoteur 13 s'arrête automatiquement et les déplacements de l'arbre 1 sont transmis intégralement à l'arbre 2, la démultiplication étant déterminée par le système pignon-crémaillère.

On voit ainsi que les déplacements angulaires de l'arbre 2 varient par rapport aux déplacements de l'arbre 1, si bien qu'il existe une démultiplication du mécanisme mesurée par le rapport k des déplacements angulaires instantanés des arbres 1 et 2. La grandeur des signaux délivrés par les capteurs 21 et 22 définit la valeur instantanée du rapport k qui peut constituer de la sorte le paramètre de déclenchement automatique ou de l'arrêt du moteur 13.

En pratique les signaux représentatifs de la vitesse du véhicule de l'angle de déplacement du volant 30 et de l'angle de déplacement de l'arbre de direction 2 sont traités par l'unité de mesure 25.

La valeur instantanée du rapport k est comparée à une valeur de référence ko variable en fonction de la vitesse du véhicule et un signal d'erreur E commande l'étage de puissance 24 à fonction d'interrupteur dont la tension de sortie assure l'enclenchement, l'arrêt et la variation de vitesse du moteur 13 tant que subsiste le signal d'erreur E.

Le système roue et vis 12, 14 présente l'intérêt de faire tourner le porte-satellites 10 indépendamment des mouvements du volant.

De même si le fonctionnement du moteur 13 ou d'un organe de commande (capteur) est déffectueux, le porte-satellites 10 reste bloqué et le véhicule demeure manoeuvrable avec un rapport de démultiplication élevé quelle que soit la vitesse du véhicule.

**Revendications**

1/ Mécanisme de direction à démultiplication variable asservi à la vitesse du véhicule du type comportant un moteur électrique d'entraînement d'un organe de réglage du rapport de démultiplication et dont l'alimentation est asservie à la vitesse du véhicule, caractérisé par le fait que la colonne de direction comporte de manière en soi connue un arbre d'entrée (1) et de sortie (2) auxquels sont rigidement reliés des pignons d'entrée (4) et de sortie (5) en prise avec des satellites (6, 8 - 7, 9) d'un porte-satellites (10) qui se prolonge axialement par un moyeu (11) disposé concentriquement à l'un des arbres (1, 2) sur lequel est monté un organe d'entraînement (12) et de réglage du rapport de démultiplication actionné par le moteur électrique (13) à vitesse variable.

2/ Mécanisme de direction selon la revendication 1, caractérisé par le fait que le moteur électrique est alimenté à partir du signal de sortie délivré par une unité de mesure (25) en réponse aux signaux d'entrée fournis par un capteur V de la vitesse du véhicule et de capteurs (21, 22) de la position angulaire des arbres (1, 2).

3/ Mécanisme selon la revendication 2, caractérisé par le fait que le rapport k des déplacements angulaires instantanés des arbres (1, 2) est comparé à une valeur de référence ko et qu'une unité de puissance (24) délivre la tension de commande du moteur (13) en fonction d'un signal d'erreur E délivré par une unité de mesure (25) recevant les signaux représentatifs de la vitesse du véhicule.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | US-A-4 556 116 (O'NEIL) <br> * Figures 1,2 * <br> --- | 1 | B 62 D 5/04 |
| A | FR-A-2 552 387 (JIDOSHA KIKI LTD) <br> * Figures 1-3,11; résumé * <br> --- | 1-3 | |
| A | US-A-4 650 019 (YANAI) <br> * Résumé; figure 1 * <br> ----- | 1-3 | |

**DOMAINES TECHNIQUES RECHERCHES (Int. Cl.4)**

B 62 D

**Le présent rapport a été établi pour toutes les revendications**

| Lieu de la recherche | Date d'achèvement de la recherche | Examinateur |
|---|---|---|
| LA HAYE | 10-01-1989 | ONILLON C.G.A. |

EPO FORM 1503 03.82 (P0402)